Europäisches Patentamt

European Patent Office

Office européen des brevets

(19)

(11) **EP 0 514 629 B1**

(12) **EUROPÄISCHE PATENTSCHRIFT**

(45) Veröffentlichungstag und Bekanntmachung des Hinweises auf die Patenterteilung:
**13.05.1998   Patentblatt 1998/20**

(51) Int Cl.$^6$: **H04L 7/033**

(21) Anmeldenummer: **92103109.2**

(22) Anmeldetag: **25.02.1992**

(54) **Verfahren zur Demodulation und Synchronisation für digital modulierte Signale**

Method for demodulation and synchronisation of digitally modulated signals

Méthode de démodulation et de synchronisation de signaux modulés numériquement

(84) Benannte Vertragsstaaten:
**DE FR GB IT NL SE**

(30) Priorität: **22.05.1991   DE 4116614**

(43) Veröffentlichungstag der Anmeldung:
**25.11.1992   Patentblatt 1992/48**

(73) Patentinhaber: **ROBERT BOSCH GMBH**
**70442 Stuttgart (DE)**

(72) Erfinder: **Ketterling, Hans-Peter, Dipl.-Ing.**
**W-1000 Berlin 42 (DE)**

(56) Entgegenhaltungen:
EP-A- 0 230 559          FR-A- 2 549 322
US-A- 4 227 175          US-A- 5 073 905

- **1990 IEEE MILITARY COMMUNICATIONS CONFERENCE Bd. 1, 30. September 1990, MONTEREY, US Seiten 141 - 145 MAPLES ET AL. 'Rapid Clock Recovery Technique with Monotonic Phase Error Metric'**

**Beschreibung**

Beschreibung des grundlegenden Prinzips

Die Erfindung betrifft ein Verfahren der im Oberbegriff des Anspruchs 1 angegebenen Art.

Insbesondere für digitale Mobilfunkübertragungsverfahren wurden eine Reihe von aufwendigen Demodulations- und Synchronisationsverfahren entwickelt. Aber auch bei an sich recht komplex arbeitenden bekannten Verfahren wird das Signal zur Demodulation bzw. Synchronisation mittels diskreter Schwellwerte verarbeitet. Störungen wirken sich dabei unmittelbar auf das Demodulationsergebnis aus und können nur durch aufwendige, die Redundanz erhöhende, Übertragungsverfahren vermindert werden. Mit diesen Verfahren ist jedoch stets ein Verlust der über vorgegebenen Nachrichtenkanal übertragbaren Daten verbunden.

Aus der US-A-4 227 175 ist bereits ein Gerät zur Rückgewinnung von Daten bekannt, die auf einem magnetischen Medium gesichert sind, wobei zuerst eine Taktrückgewinnung erfolgt, z.B. mittels einer PLL-Schaltung, um damit die Datenrückgewinnung zu ermöglichen. Diese erfolgt dann durch einen Vergleich der abgetasteten Signalform nacheinander mit allen möglichen in einem Speicher abgelegten Signalformen, um die Signalform mit der besten Übereinstimmung zu ermitteln.

Der Erfindung liegt die Aufgabe zugrunde, bei einem Verfahren der eingangs genannten Gattung den Rechneraufwand zu verringern und eine Lösung anzugeben, welche auch bei gestörtem Übertragungskanal in weiten Grenzen zuverlässig und sicher arbeitet.

Diese Aufgabe wird mit den kennzeichnenden Merkmalen des Anspruchs 1 gelöst.

Gemäß der Erfindung werden ein einfach und gut integrierbares digital arbeitendes Verfahren sowie einige Weiterbildungen angegeben, die keine aufwendige Rechnerleistung oder umfangreiche Software erfordern und die gleichzeitige Durchführung von Synchronisation und Demodulation ermöglichen.

Das Grundprinzip des erfindungsgemäßen Demodulations- und Synchronisationverfahrens beruht auf der Erkennung von Mustern und der daraus abgeleiteten Bedeutung der empfangenen Symbole sowie der Gewinnung von Synchronimpulsen, die zur Nachführung eines Oszillators dienen, der den Bezugstakt für die gesamte Schaltung liefert.

Die Grundlage der dann folgenden Verarbeitung ist die Amplitudenquantisierung des nach harter Begrenzung und linearer FM-Demodulation gewonnenen Basisbandsignales, welche in regelmässigen Zeitabständen, die in ganzzahligem Verhältnis zum Symboltakt stehen, vorgemommen wird. Die Amplituden werden vorzugsweise mit einem 8-Bit-A/D-Wandler mit $2^n$-fachem Symboltakt abgetastet, vorteilhaft sind beispielsweise Verhältnisse von n = 3 oder 4 d.h. $2^n = 8$ bzw. 16.

Die erfindungsgemäßen Verfahren ist besonders im Zusammenhang mit zwei- und mehrstufigen Winkelmodulationsverfahren mit konstanter Amplitude vorteilhaft anwendbar. Dabei ist das Verfahren nicht im klassischen Sinne kohärent. Statt dessen kann eine relativ harte Begrenzung angewendet werden, so daß keine automatische Verstärkungsregelung (AGC) nötig ist und eine bemerkenswerte Unempfindlichkeit gegen Frequenz- und Phasenfehler erreicht wird.

Insbesondere ist hier die Demodulation von CPM-Verfahren und speziell CP-BFSK(2RC) und CP-4FSK (2RC) von Bedeutung. Die Anwendung bei Partial-Response-Verfahren ist ebenfalls möglich, beispielsweise in Form von CP-BFSK(4RC). Die grundsätzliche Vorgehensweise ist immer gleich, und soll daher an einem Beispiel, nämlich der CP-BFSK(2RC)-Modulation, genauer betrachtet werden.

Die Synchronisation des Symboltaktes $f_s$ läßt sich am besten aus der Symbolflanke ableiten. Für

$$\left|S_{(t+T_s)} - S_{(t)}\right| = max.$$

mit

$$\left|S_{(t+T_s)} - S_{(t)}\right| \geqq S_o/2$$

ist die Flankenmitte festgelegt, wobei $T_s$ die Symboldauer ist. Der Abtasttakt für die Flankenmitte wird mittels einer PLL-Schaltung gewonnen, welche die Abtastpulsfolge mit einer aus einem VCXO gewonnenen Folge vergleicht und dieser nachregelt. Damit wird der Langzeitmittelwert

$$f_{vcxo} = f_s$$

erzeugt und gehalten. Die PLL-Schaltung enthält ein Gatter zur Ausblendung der Referenzimpulse, falls kein Flankenimpuls erzeugt wird, wie dies geschieht, wenn kein Informationswechsel auftritt, also bei 1-1- und 0-0-Übergängen. Damit haben nur 0-1- und 1-0-Übergänge Einfluß auf das Demodulationsergebnis.

Phasensprünge können durch eine digitale Hilfsschleife, die sehr einfach als Zähler realisiert werden kann, ausgeglichen werden. Falls der erwartete Impuls mehrmals nicht in das Erwartungsfenster fällt, kann mittels dieser Hilfsschleife bei erweitertem Erwartungsfenster ein Schnellübergang in einem oder mehreren Schritten auf die neue Lage vorgenommen werden. Die Festlegung der Fenstergröße und der Korrekturschrittweite ist kritisch und gegebenenfalls experimentell zu ermitteln. Ziel ist es, die Synchronisation bei möglichst geringem Verhältnis S/N zu erhalten.

Die Demodulation erfolgt im Gegensatz zu konventionellen Verfahren zur Demodulation von Digitalsignalen mittels Mustererkennung und wird nachfolgend näher charakterisiert.

Um bei möglichst geringem Verhältnis S/N noch demodulieren zu können, wird dasjenige Signalkurvenstück für empfangen angenommen, das einer der erwarteten Musterkurven am nächsten kommt. Die Größe der Abweichung kann als Qualitätskriterium benutzt werden, außerdem können irreguläre Zustände infolge von Störungen auf dem Übertragungsweg besonders gekennzeichnet weden. Beides unterstützt die erfolgreiche Decodierung gestörter Signale beim Einsatz gewisser Arten fehlerkennender Codes.

Eine bevorzugte Ausführung beruht darauf, daß das entsprechende symboltaktrichtig abgetastete Muster für den Fall der zentrierung zur Symbolmitte über die Symbollänge $T_s$ aufgezeichnet und mit den gespeicherten Musterkurven verglichen wird. Das gesuchte Muster ist dann jenes, welches beispielsweise die geringste Summe der quadratischen Differenzen zum empfangenen Muster aufweist. Hierzu ist jedoch vor allem bei höherwertigen Modulationsarten oder bei der Abtastung über mehr als eine Symboldauer eine große Anzahl von Vergleichen erforderlich, die außerdem bei höheren Übertragungsraten eine schnelle Hardware voraussetzt.

Eine weitere bevorzugte Ausführung macht sich die Möglichkeit zunutze, daß aus dem Zeitverlauf bestimmte Kennzeichen extrahiert werden, aus denen der Symbolinhalt berechnet werden kann. Derartige Verfahren sind teilweise rechenintensiv und stützen sich auf komplizierte und umfangreiche Algorithmen, deren Abarbeitung bei höheren Übertragungsgeschwindigkeiten leistungsfähige Hardware voraussetzt, die gewöhnlich auch recht teuer ist.

Eine bevorzugte dritte Methode, die sich als besonders günstig erwiesen hat, bedient sich eines Speichers zur Demodulation. Einige digitalisierte Amplitudenwerte des empfangenen Signals dienen dabei als Adressen für einen Speicher, in dem direkt das zugeordnete Ergebnis steht, das ursprünglich durch quasisymmetrische Betrachtungen bzw. mit einem geeigneten Algorithmus gewonnen wurde, wobei auch selbstlernende Systeme geeignet sind. Durch geeignete Adressenanordnung kann der Speicherinhalt direkt dem Muster zugeordnet werden.

Unerlaubte Adressen bzw. Kombinationen von Zuständen können direkt zur Ausgabe eines Qualitätskriteriums benutzt werden. Als Obergrenze für praktisch ausgeführte Systeme sollte allerdings ein Adreßraum von $2^{16}$ bis $2^{20}$ nicht überschritten werden, um den erforderlichen Speicher noch wirtschaftlich realisieren zu können.

Dieses Prinzip ist so einfach wie leistungsfähig, weil es letztendlich auf einer Art assoziativer Speicherung beruht. zu seiner Realisierung ist nur eine einfache Hardware erforderlich, die hauptsächlich aus Speichern besteht, deren maximale Arbeitsgeschwindigkeit im MHz-Bereich liegt, während die hier schwerpunktmäßig betrachtete digitale Übertragung über Mobilfunkkanäle auf Übertragungsgeschwindigkeiten von nur einigen hundert kbit/s basiert. Allerdings wird doch mitunter der acht- bis sechszehnfache Symboltakt als Arbeitsgeschwindigkeit benötigt, so daß doch gewisse Mindestanforderungen an die Geschwindigkeit der Hardware gestellt werden müssen.

Quantisiert man beispielsweise den Symbolbeginn, die Symbolmitte und das Symbolende mit je k bit, beispielsweise mit k = 4, so ergibt sich ein Adreßraum von $2^{3k}$, hier also $2^{12}$. Der Speicher kann dann die wahrscheinlichste Teilsymbolfolge, z. B. "010", eine Störmeldung 1 oder 0 und ein Qualitätskriterium mit (k-1) bit, hier also 3 bit, ausgeben, so daß ein Ergebniswort in diesem Fall 8 bit enthält. Für CP-BFSK(2RC) ist damit ein ROM von 32 kByte ausreichend.

Taktet man die Anordnung beispielsweise mit dem achtfachen Symboltakt und entnimmt zeitlich äquidistante Proben, so kann man auch Bittaktimpulse ableiten. Sie werden im Speicher auf die Flankenmitte gesetzt und erscheinen dann, wenn gerade die Mitte eines 0-1- oder 1-0-Überganges erreicht ist und $|S_{(t+T)} - S_{(t)}| \geqq S_o/2$ maximal ist. Findet jedoch kein Informationswechsel statt, so gibt es keine zur Synchronisation brauchbaren Flanken und folglich auch keinen Flankenmittenimpuls. Der Musterspeicher kann also zur Demodulation und zur Synchrontaktgewinnung gleichzeitig benutzt werden.

Um die Störbefreiung zu verbessern, ist auch die Abtastung über mehrere Symbolzeiträume möglich. Bei mehreren Symbolzeiträumen stellen fünf Abtastzeiträume bevorzugte Werte dar. Bei einer Abtastung mit Datenworten von vier bit ersich ein Adreßraum von $2^{20}$. Damit läßt sich auch ein längerer Teil einer Symbolfolge dekodieren, wie beispielsweise die Symbole "01" oder die wahrscheinliche Nachbarsymbolfolge, beispielsweise "0010". Faßt man diese noch mit einem aufgrund eines Störkriteriums erhaltenen Signalbit sowie drei die Signalqualität kennzeichnenden Bits zusammen, so erhält man eine Signalfolge von 8 bits. Der resultierende Speicherbedarf beträgt somit 1 MByte.

Das erfindungsgemäße Verfahren läßt sich insbesondere dann vorteilhaft einsetzen, wenn anstelle einer Amplituden- und Mittelwertnormierung Abweichungen von der Mittellage bei der Decodierung berücksichtigt werden. Weiter unten werden einige wichtige Beispiele für die Auswertung gestörter Symbole bei Amplitudenfehlern, Offsetfehlern und Signalverformungen dargestellt werden. Dabei wird die Signalform aufgrund der vorgenommenen Mustererkennung selbsttätig der sich aufgrund des Geamterscheinungsbildes ergebenden Bedeutung zugeordnet. Damit wird die Signalform präziser bewertet als bei einfachem Schwellenvergleich mit festen Schwellen, da die zur Verfügung stehende Gesamtinformation besser genutzt wird.

Mit dem erfindungsgemäßen Verfahren ist eine weitgehende Unterdrückung von Rauschen und Störungen möglich. Dabei wird auch deutlich, wie aus der Signallage und dessen Form ein Qualtitätskriterium ermittelt werden kann. Bei der Ermittlung dieses Qualitätskriteriums wird bevorzugt auf die Ergebnisse bei der Decodierung mehrerer Symbole zurückgegriffen. Damit läßt sich auf einfache Weise eine Aussage auch über die mittlere Empfangsqualität erhalten.

Bei der Signalübertragung mittels bestimmter fehlerkorrigierender Codes ist eine Aussage über die Sicherheit der erhaltenen Entscheidung bei jedem einzelnen Symbol günstig und kann bei der nachfolgenden Beseitigung von Restfehlern herangezogen werden. Hierzu ist insbesondere ein für jedes einzelne Symbol bei einer ersten Bewertung erhaltenes vorläufiges oder "schnelles" Kriterium nützlich.

Von besonderer Bedeutung ist, daß die Bewertung der Form unabhängig von deren Lage erfolgen kann. Damit verschwinden die Auswirkungen von überlagerten niederfrequenten Störungen, variablen Offsets etc., bzw. werden diese in ihrer Auswirkung wesentlich herabgesetzt. Dieser Effekt beruht auf der Tatsache, daß letztlich keine in Bezug auf Schwellen ermittelten Absolutwerte, sondern Signaldifferenzen ausgewertet werden, welche von den vorgenannten Störungen nicht oder nur wenig beeinträchtigt werden.

zur Erhöhung der Übertragungssicherheit kann eine Mittelwertbildung über jeweils mehrere aufeinanderfolgende Symbole herangezogen werden. Die Mittelwertbildung nutzt dabei die Tatsache, daß über ein Symbol mehrere Informationen gewonnen werden, beispielsweise ein Symbolinhalt "1" und eine wahrscheinliche Teilfolge "010".

Der Nutzen dieses Verfahrens wird besonders sichtbar, wenn man davon ausgeht, daß wenige einzelne Teilentscheidungen jeweils falsch sein können, die Mehrheit jedoch in der Regel richtig ist. Durch die Mittelwertbildung überwiegt dann der Einfluß der richtigen Entscheidungen, und die Wahrscheinlichkleit, ein bestimmtes Symbol falsch zu demodulieren wird wesentlich reduziert. Eine weitere Verbesserung ist erzielbar, wenn man statt der demodulierten logischen Werte direkt die quantisierten Signalwerte für diese Mittelwertbildung heranzieht, da dann eine präzisere Verwertung der ursprünglich vorhandenen Information möglich ist.

Günstig ist es auch, die Folge als quantisierte Werte einzugeben, das Symbol aber als normierten Wert "1" oder "0", um die Gewichtung zu beeinflussen. Die letzte Optimierung kann hierbei durch praktische Versuche erfolgen.

Entsprechendes gilt bei der Abtastung über mehrere Symbole. Die Mittelwertbildung ist fehlertolerant, so daß einzelne falsche Informationen überdeckt werden, jedoch kann auch hier bei Werten zwischen "1/2" und "1" bzw. "0" und "1/2" auf die Signalqualität zurückgeschlossen werden, wobei "1/2" gerade die Mitte zwischen den beiden logischen Zuständen zugeordneten Amplitudenwerten symbolisieren soll.

Nach dem gleichen Prinzip wie oben kann die Mittelwertbildung durch einen Speicher übernommen werden. Der Adreßraum ergibt sich aus der zahl der verknüpften Symbole multipliziert mit der Zahl der Quantisierungsbits je Symbol. Im obigen Beispiel folgt 3 x 4 bit, also ein Adreßraum von $2^{12}$. Die Symbolmitte wird dabei stärker bewertet. Man kann aber auch nur das Symbol und die benachbarten Flanken betrachten und erhält beispielsweise aus der Flanke 01 das Symbol "1" und den benachbarten Flanken 0-1 und 1-0 das Wort "01110", weshalb dem betrachteten Symbol die Bedeutung "1" zugeordnet werden kann. Auch hier kann statt der logischen Bedeutung besser mit der quantisierten Amplitude gearbeitet werden.

Synchronisation und Demodulation lassen sich auf der Basis einer einfachen Mustererkennung durch zwei hintereinander geschaltete Speicher realisieren und sind damit sehr gut in integrierter Form herstellbar.

Das erfindungsgemäße Verfahren ist insbesondere für sogenannte "höhere Modulationsarten" und Partial-Response-Verfahren geeignet. Insbesondere ist eine sinngemäße Erweiterung auf mehrstufige Modulationsarten, wie beispielsweise CP-4FSK(2RC), günstig. Hierzu ist allerdings eine geringfügig höherstufige Quantisierung notwendig, woraus ein höherer Speicherbedarf resultiert, so daß der Aufwand steigt. Insbesondere wird die Abtastung über zwei Symbole relativ aufwendig, da der benötigte Adreßraum des Musterspeichers ziemlich groß wird.

Die Auswertung über mehrere Symbole ist beim Partial-Response-Verfahren unumgänglich. Die Auswertung über die Muster erfolgt dabei ganz analog zu dem bisher dargestellten Prinzip - braucht also nicht näher ausgeführt zu werden.

Es besteht damit eine große Anzahl von möglichen Ausführungsvarianten. Es ist dabei zu erwarten, daß bei einer Betrachtung von Abschnitten, die länger als zwei Symbole sind, keine wesentliche weitere Verbesserung mehr zu erzielen ist.

Die Einbeziehung von mehr als drei Zeitabschnitten pro Symbol (d.h. Symbolbeginn, Symbolmitte und Symbolende) bringt aufgrund der Basisbandfilterung, die hier bei 2RC-Impulsen mit etwa 1/2 · fs erfolgt, ebenfalls keinen merklichen weiteren Gewinn, da die Änderungsgeschwindigkeit einen vorbestimmten, signalimmanenten Wert nicht überschreiten kann.

Die Gewinnung der Inhalte des Muster-I-ROMs kann durch quasigeometrische Betrachtungen erfolgen, wie es bereits angedeutet wurde. Für das Muster-II-ROM werden dann Mehrheitsentscheidungen zugrundegelegt, beispielsweise bildet die Folge "+", "1", "-" ("+" und "-" stehen hier für steigende bzw. fallende Flanken) ein klares Indiz für eine empfangene "1", die sich dann höchstwahrscheinlich zwischen zwei Nullen befindet. Wird dann insgesamt mit allen Werten eine mehr als 50%ige Wahrscheinlichkeit für die "1" gefunden, so wird der betreffende Zustand endgültig zu "1" erklärt - entsprechendes gilt für die "0".

Das Muster-II-ROM ist allerdings wesentlich größer auszuführen, wenn die Mittelung direkt mit den digitalisierten Signalwerten erfolgen soll, das Muster-I-ROM muß hierfür zuvor die quantisierten Signalwerte in ein ebenfalls quantisiertes vorläufiges Ergebnis, nicht also nur den logischen Wert "1" oder "0", umgewandelt haben und zur Verfügung stellen.

Die Qualitätsinformation kann dann auf zweierlei Art genutzt werden. Einmal kann sie das Muster-II-ROM zur Gewinnung der mittleren Signalqualität verwenden, zum anderen kann man sie bei der Decodierung der Informationen im Muster-I-ROM nutzen, sofern ein fehlerkorrigierender Code verwendet wird, der diese Information sinnvoll verwerten kann, wie dieses bei einigen diesbezüglich konstruierten Code-Familien möglich ist.

Beschreibung der Arbeitsweise erfindungsgemäßer Schaltungen

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1 ein Blockschaltbild der Auswerteschaltung für ein Ausführungsbeispiel des erfindungsgemäßen Verfahrens,
Figur 2a eine schematische Darstellung zum Muster-I-Vergleich bei Rohdemodulation und Synchronisationsimpulsgewinnung,
Figur 2b eine schematische Darstellung zum Muster-II-Vergleich bei Mittelwertbildung und Fehlererkennung bzw. Fehlerkorrektur,
Figur 2c eine schematische Darstellung zur Auswertung bei CP-BFSK(2RC)-Modulation,
Figur 3 eine schematische Darstellung des Zusammenhanges zwischen Muster- und Speicherinhalt bei einer vorteilhaften Weiterbildung des erfindungsgemäßen Demodulations- bzw. Hüllkurvenverfahrens,
Figur 4 schematische Darstellungen ungestörter und gestörter Symbole,
Figur 5 schematische Darstellungen von Signalen unterschiedlicher Qualität (sogenannte Augenmuster),
Figur 6 die Ermittlung des Signalinhalts eines Symbols unter Berücksichtigung der Nachbarsymbole sowie
Figur 7 die Ermittlung von Symbols mittels quadratischer Auswertung der Amplituden.

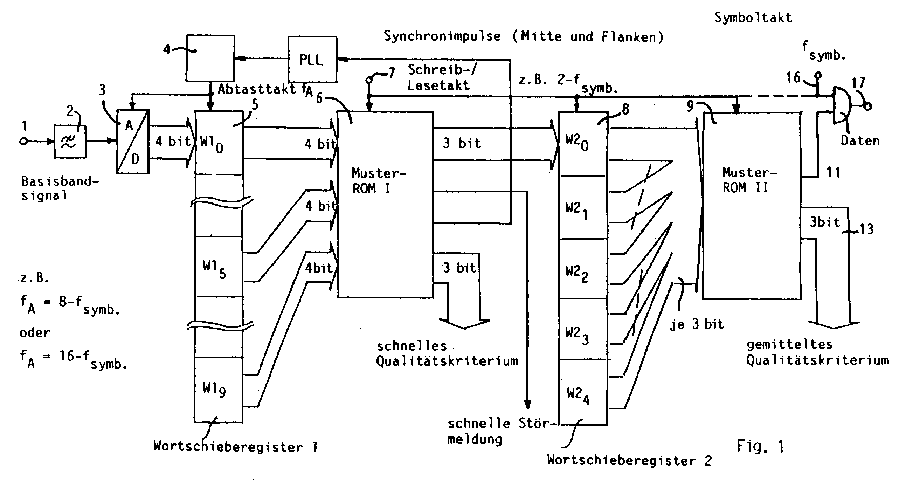

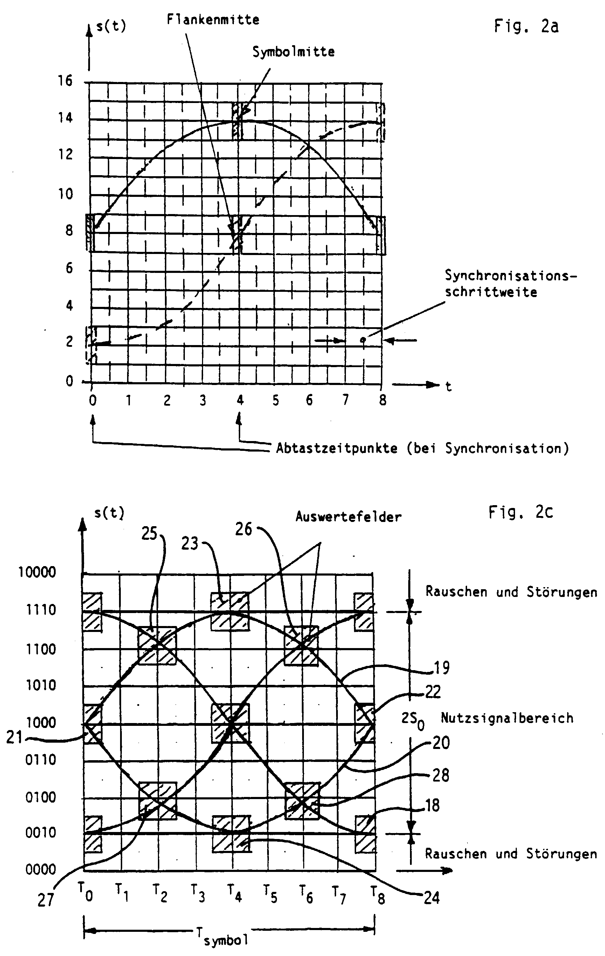

Bei dem in Figur 1 dargestellten Blockschaltbild eines Ausführungsbeispiels einer Schaltung zur Durchführung des erfindungsgemäßen Verfahrens gelangt das an einem Eingangsanschluß 1 erscheinende Basisbandsignal zu einem Tiefpaß 2 und wird dort steilflankig von störenden Oberwellenanteilen befreit. Der Ausgang des Tiefpasses 2 ist verbunden mit dem Eingang eines Analog-Digital-Wandlers 3. Dieser D/A-Wandler quantisiert das Basisbandsignal mit beispielsweise 4 bit Breite. Diese Digitalisierung erfolgt vorzugsweise mit dem acht- oder sechzehnfachen Symboltakt, d.h. jedes "Symbol" wird in äquidistanten Zeitabständen achtmal bzw. sechzechnmal abgetastet und somit in acht bzw. sechzehn Digitalworte von 4 Bit Länge umgewandelt. Dieser Takt wird von einem Taktgeber 4 erzeugt, dessen Ausgangssignal auch an den Takteingang eines ersten WortSchieberegisters 5 gelangt, das an seinen Dateneingang das digitale Ausgangssignal des A/D-Wandlers zugeführt erhält. Das Wort-Schieberegister 5 hält jeweils neun Wörter zu je 4 bit zur Adressierung eines nachgeschalteten ROM-Speichers 6 bereit. (Der Signalverlauf des entsprechenden "Muster-I-Vergleichs" für die Rohdemodulation und die Synchronisation sind schematisch in Figur 2a wiedergegeben.)

Das Taktsignal des Taktgebers 4 weist eine Taktrate auf, die so groß ist, daß die Synchronisationsmöglichkeit des Signals bei der digitalen Verarbeitung ein ausreichend feines Raster aufweist. Wird beispielsweise zur hinreichend genauen Synchronisation jeweils der sechzehnte Symboltakt ausgewählt, so ist das erste Wort-Schieberegister 5 entsprechend länger auszubilden. Da aber nur Symbolbeginn, Symbolmitte und Symbolende benötigt werden, reicht ein Adreßraum des ROM-Speichers 6 von 12 bit aus.

Mit einem ROM-Speicher mit einer Kapazität von 32 kBytes können am Ausgang des ROMs 6 je ein Synchronimpuls, ein Störmeldungsbit, drei die Signalqualität kennzeichnende Bits sowie drei Bits zur Kennzeichnung des Informationsgehalts des jeweils decodierten Kurvenstücks des betreffenden Signalabschnitts - also beispielsweise "010" - erhalten werden.

Dem Ausgang des ersten ROMs 6 ist ein weiteres (zweites) Wort-Schieberegister 8 nachgeschaltet, wobei die Ausgangsleitungen, d.h. die Leitungen, auf denen der Informationsinhalt des dekodierten Kurvenstücks erscheint mit dem Dateneingang des zweiten Wort-Schieberegisters verbunden ist. Das Auslesen aus dem ersten ROM 6 sowie das Takten des zweiten Schieberegisters 8 erfolgt mit dem doppelten Symboltakt, d.h. mit dem um den Faktor vier untersetzten Abtasttakt des Taktgebers 4. Der untersetzte Takt (z.B. $2_{fsymb}$) wird am Eingang 7 bereitgestellt. Die Kopplung zwischen dem Takt des Taktgebers 4 und dem Eingang 7 für den untersetzten Takt ist jedoch nicht starr, sondern ist abhängig von der Synchronisation zum Eingangssignal, wobei mit dieser Synchronisation eine feste Phasenlage in bezug auf die Symbole des Eingangssignals gemeint ist, so daß die weitere Verarbeitung symbolsynchron erfolgen kann. Synchronimpuse (Mitten bzw. Flanken) als Ausgangsimpulse des ROMs 6 gelangen über einen Phasenregelkreis (PLL-System) zum Taktgeber 4.

Die Informationsinhalte der Symbole bilden im zweiten Wort-Schieberegister 8 eine Wortfolge, die zur Adressierung eines weiteren, dem Schieberegister 8 nachgeschalteten, ROMs 9 dient.

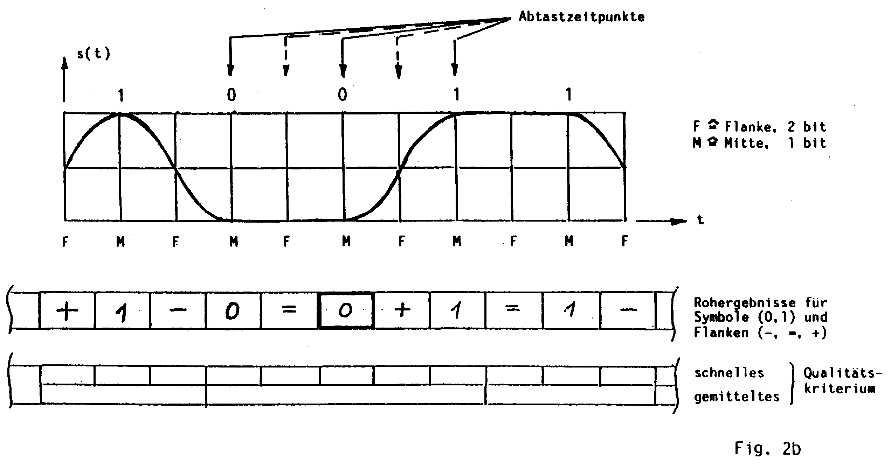

Die im Schieberegister 8 enthaltene Wortfolge von beispielsweise 5 mal 3 bit entspricht fünf aufeinanderfolgendenden Kurvenlementen und repräsentiert den dekodierten den Informationsinhalt von zwei aufeinanderfolgenden Symbolen. (Die entsprechenden Signalverhältnisse sind schematisch in Figur 2b dargestellt).

Mit der Adressierung des ROM-Speichers 9 wird eine Mittelwertbildung vorgenommen, wobei die Kurvenstücke - in symbolisierender Darstellung beispielsweise die Folge "FMFMF" haben mögen. "F" steht dabei für Flanke und "M" für Mitte. Die Mittelwertbildung aus dem Informationsgehalt von zwei Symbolen des Eingangssignals erfolgt im Muster-ROM 9. Letzteres hat - im dargestellten Beispiel - einen Adreßraum von $2^{15}$ und stellt die decodierte Information sowie ein gemitteltes Qualitätskriterium zur Verfügung, womit sich ein notwendiger Umfang des Speichers von 16 kByte ergibt.

Am Ausgang des ROMs 9 erscheint die gemittelte decodierte Information. An einem Eingang 10 steht ein Taktsignal $f_{SYMB}$ zur Verfügung, das der Rate der am Eingang erscheinenden Symbole entspricht. Mittels eines UND-Gatters 11, dessen einem Eingang ein Bit des adressierten Speicherinhalts des ROMs 9 und dessen anderem Eingang das Taktsignal vom Eingang 10 zugeführt wird, wird die dekodierte Information, bestehend aus den gemittelten "O" und "1"-Werten, einem Ausgang 12 zugeführt. Ein weiteres Drei-Bit-Wort, als Inhalt der aktuell adressierten Speicherplätze, am Ausgang des ROMs 9 bildet ein gemitteltes Qualitätskriterium, welches ein Maß für die Zuverlässigkeit des am Ausgang 12 erscheinenden Signals liefert.

Benutzt man bei der Mittelwertbildung nur die Symbolmitten, so reduziert sich der Umfang des zweiten Speichers ganz erheblich, beim vorliegenden Beispiel auf 0,25 kByte. Die Taktfrequenz am Eingang 7 reduziert sich damit ebenfalls auf die Hälfte, d.h. es muß dann nur mit $f_s$, der Rate des Einlaufens der Symbole am Eingang, und nicht mehr mit $2 \cdot f_s$ getaktet zu werden und das Gatter 11 am Decodierausgang kann ebenfalls entfallen.

Soll die Mittelwertbildung direkt mit den quantisierten Amplitudenwerten erfolgen, ist die Schaltung entsprechend zu erweitern.

Wesentlich beim Betrieb der erfindungsgemäßen Demodulations- und Synchronisationverfahrens ist das Erkennen von Mustern und die daraus abgeleitete Bedeutung der empfangenen Symbole sowie die Gewinnung von Synchronimpulsen, die insbesondere zur Nachführung des Oszillators 4 dienen, der den Bezugstakt für die gesamte Schaltung liefert.

Wichtig für die dann folgenden Verarbeitung ist die Amplitudenquantisierung des nach harter Begrenzung und linearer FM-Demodulation gewonnenen Basisbandsignales, die in regelmässigen Zeitabständen, die in ganzzahligem Verhältnis zum Symboltakt stehen, vorgemommen wird. Die Amplituden werden vorzugsweise mit dem 8-Bit-A/D-Wandler 3 mit $2^n$-fachem Symboltakt abgetastet, vorteilhaft ist $n = 3$ oder 4, d.h. $2^n =$

8 bzw. 16.

In den Figuren 2a und 2b sind (wie bereits erwähnt) Details der Auswertung in schematischer Darstellung wiedergegeben. Es ist in Figur 2a die Zuordnung der Abtastzeitpunkte zum Symbol für Synchronisation Und Rohdemodulation wiedergegeben. Die Abtastzeitpunkte bei Synchronisation sind am Symbolanfang, der Symbolmitte und am Symbolende gelegen. Das durchgezogen dargestellte Signal bildet das Symbol, während die gestrichelt dargestellte Signalflanke das Synchronisationsverhalten betrifft.

In Figur 2c sind die Verhältnisse bei der Auswertung von CP-BFSK(2RC) schematisch dargestellt: Das auszuwertende Symbol T wird mittels der schraffiert dargestellten innerhalb eines zeit- und amplitudenmäßig begrenzten Auswertefensters 18 erfaßt, welches mit einem Raster entsprechend dem zeitlich zu erwartenden Verlauf der Symbole versehen ist. Für einen Verlauf, der einer positiven oder negativen Halbwelle 19 bzw. 20 entspricht, sind zu Beginn und am Ende des "Fensters" im Nulldurchgang Auswertefelder 21 und 22 vorgesehen. Entsprechend sind Auswertefelder 23 und 24 im Bereich des positiven bzw. negativen Minimums in der Mitte des Auswertefensters vorgesehen. Weitere Auswertefelder 25 bis 28 sind im zeitlichen und amplitudenmäßigen Zwischenbereich vorgesehen.

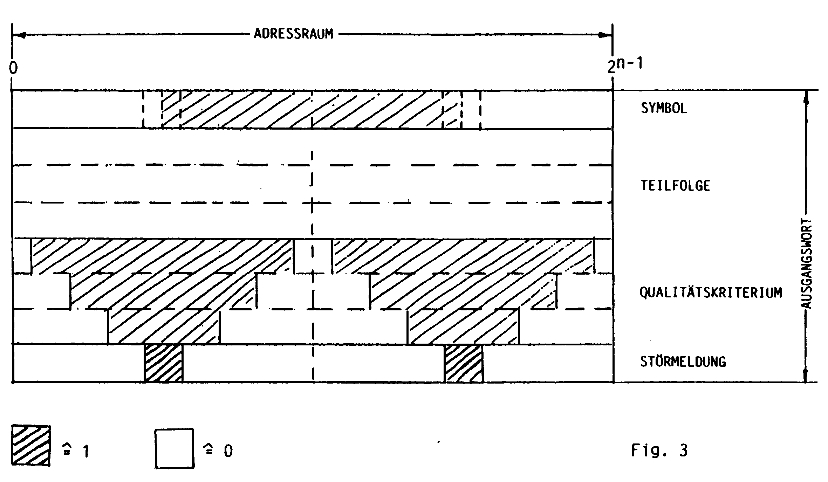

Figur 3 zeigt dabei schematisch die Musterzuordnung zu den Adressen. Als obere Grenze für den Speicherbereich eines praktisch auszuführenden Systems erscheint ein Adreßraum von $2^{16}$ bis $2^{20}$ als geeignet bzw. sollte nicht überschritten werden, um den erforderlichen Speicher noch wirtschaftlich realisieren zu können.

Dieses Prinzip ist deshalb so leistungsfähig, weil es letztendlich auf einer Art assoziativer Speicherung beruht. Zu seiner Realisierung ist nur eine einfache Hardware erforderlich, die hauptsächlich aus Speichern besteht, deren maximale Arbeitsgeschwindigkeit im MHz-Bereich liegt, während die hier schwerpunktmäßig betrachtete digitale Übertragung über Mobilfunkkanäle auf Übertragungsgeschwindigkeiten von nur einigen hundert kbit/s basiert. Allerdings wird doch mitunter der acht- bis sechzehnfache Symboltakt als Arbeitsgeschwindigkeit benötigt, so daß doch gewisse Mindestanforderungen an die Geschwindigkeit der Hardware gestellt werden müssen.

Quantisiert man, wie es in der Figur 3 dargestellt ist, den Symbolbeginn, die Symbolmitte und das Symbolende mit je k bit, z.B. $k = 4$, so ergibt sich ein Adreßraum von $2^{3k}$, hier also $2^{12}$. Der Speicher kann dann die Symbolbedeutung, z. B. "010", eine Störmeldung 1 oder 0 und ein Qualitätskriterium mit (k-1) bit, hier also 3 bit, ausgeben, so daß ein Ergebniswort in diesem Fall 8 bit enthält (vergl. nochmals Figur 3). Für CP-BFSK(2RC) würde damit ein ROM von 32 kByte ausreichen. Taktet man die Anordnung mit dem achtfachen Symboltakt und entnimmt zeitlich äquidistante Proben, so kann man auch Bittaktimpulse ableiten. Sie werden im Speicher auf die Flankenmitte gesetzt und erscheinen dann, wenn gerade die Mitte eines 0-1- oder 1-0-Überganges erreicht ist und $|S_{(t+T)} - S_{(t)}| \geq So/2$ maximal ist. Findet jedoch kein Informationswechsel statt, so gibt es keine zur Synchronisation brauchbaren Flanken und folglich auch keinen Flankenmittenimpuls. Der Musterspeicher kann also zur Demodulation und zur Synchrontaktgewinnung gleichzeitig benutzt werden.

Um die Störbefreiung zu verbessern, ist auch die Abtastung über mehrere Symbolzeiträume möglich. Bei mehreren Symbolzeiträumen stellen fünf Abtastzeiträume bevorzugte Werte dar. Bei einer Abtastung mit Datenworten von vier bit ergibt sich ein Adreßraum von $2^{20}$. Damit läßt sich auch ein längerer Teil einer Symbolfolge dekodieren, wie beispielsweise die Symbole einer "01" oder die wahrscheinliche Nachbarsymbolfolge, beispielsweise "0010". Faßt man diese noch mit einem aufgrund eines Störkriteriums erhaltenen Signalbit sowie drei die Signalqualität kennzeichnenden Bits zusammen, so erhält man eine Signalfolge von 8 bits. Der resultierende Speicherbedarf beträgt somit 1 MByte.

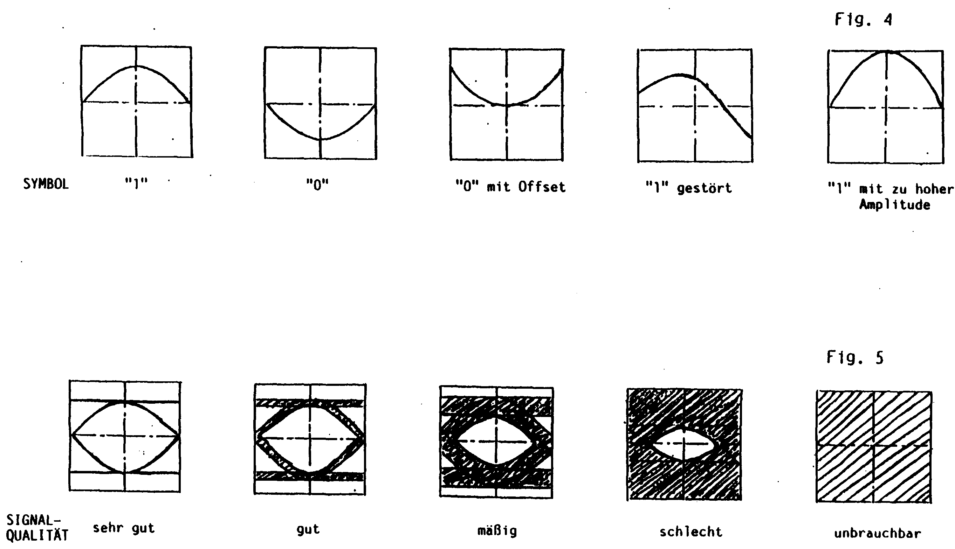

Das erfindungsgemäße Verfahren läßt sich insbesondere dann vorteilhaft einsetzen, wenn anstelle einer Amplituden- und Mittelwertnormierung Abweichungen von der Mittellage bei der Decodierung berücksichtigt werden. In Figur 4 sind einige wichtige Beispiele für die Auswertung gestörter Symbole bei Amplitudenfehlern, Offsetfehlern, Signalverformungen und dergleichen mehr dargestellt. Dabei wird die Signalform aufgrund der vorgenommenen Mustererkennung selbsttätig der sich aufgrund des Gesamterscheinungsbildes ergebenden Bedeutung zugeordnet. Damit wird die Signalform präziser bewertet als bei einfachem Schwellenvergleich mit festen Schwellen, da die zur Verfügung stehende Gesamtinformation besser genutzt wird.

Die Signalbeeinflussung durch Rauschen oder Störungen ist qualitativ in Figur 5 dargestellt. Dabei wird auch deutlich, wie aus der Signallage und dessen Form ein Qualitätskriterium ermittelt werden kann. Bei der Ermittlung dieses Qualitätskriteriums wird bevorzugt auf die Ergebnisse bei der Decodierung mehrerer Symbole zurückgegriffen. Damit läßt sich auf einfache Weise eine Aussage auch über die mittlere Empfangsqualität erhalten.

Bei der Signalübertragung mittels bestimmter fehlerkorrigierender Codes ist eine AUssage über die Sicherheit der erhaltenen Entscheidung bei jedem einzelnen Symbol nützlich und kann bei der nachfolgenden Beseitigung von Restfehlern herangezogen werden. Hierzu ist insbesondere ein für jedes einzelne Symbol bei einer ersten Bewertung erhaltenes vorläufiges oder "schnelles" Kriterium nützlich.

Von besonderer Bedeutung ist, daß die Bewertung der Form unabhängig von deren Lage erfolgt. Damit verschwinden die Auswirkungen von überlagerten niederfrequenten Störungen, variablen Offsets etc. bzw. werden in ihrer Auswirkung wesentlich herabgesetzt. Dieser Effekt beruht auf der Tatsache, daß letztlich keine in Bezug auf Schwellen ermittelte Absolutwerte, sondern Signaldifferenzen ausgewertet werden, welche von den vorgenannten Störungen nicht oder nur wenig beeinträchtigt werden.

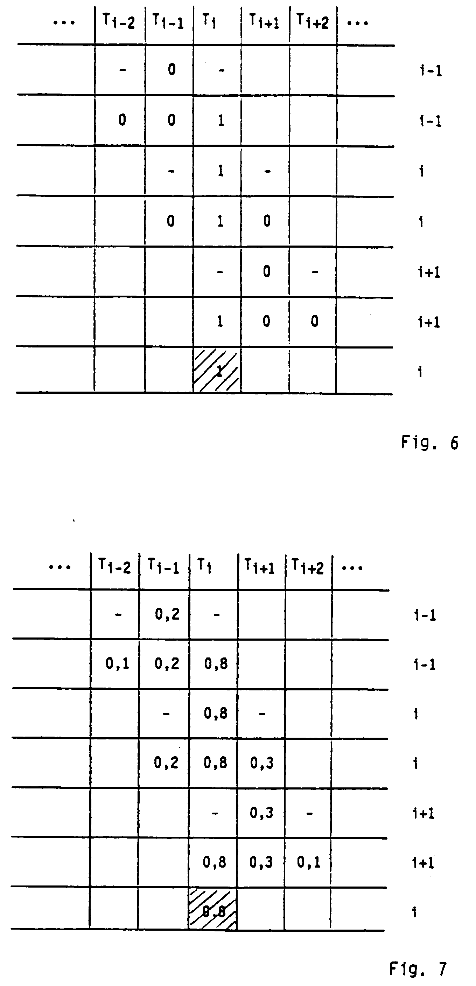

Die Mittelwertbildung kann die Tatsache nutzen, daß über ein Symbol mehrere Informationen gewonnen werden, z.B. Symbol "1" und wahrscheinliche Teilfolge "010". Figur 6 zeigt ein Beispiel, wie die Bewertung vorgenommen werden kann.

Der Nutzen dieses Verfahrens wird besonders sichtbar, wenn man davon ausgeht, daß wenige Teilentscheidungen falsch sind, die Mehrheit jedoch richtig ist. Durch die Mittelwertbildung überwiegt dann der Einfluß der richtigen Entscheidungen, und die Wahrscheinlichkleit, ein bestimmtes Symbol falsch zu demodulieren wird dadurch reduziert. Eine weitere Verbesserung ist erzielbar, wenn man statt der demodulierten logischen Werte direkt die quantisierten Signalwerte für diese Mittelwertbildung heranzieht, wie das in Figur 7 angedeutet ist, da dann eine präzisere Verwertung der ursprünglich vorhandenen Infgormation möglich ist. Denkbar ist es auch, die Folge als quantisierte Werte einzugeben, das Symbol aber als normierten Wert "1" oder "0", um die Gewichtung zu beeinflussen. Praktische Versuche sind hier für die Optimierung erforderlich. Entsprechendes gilt bei der Abtastung über mehrere Symbole. Die Mittelwertbildung ist fehlertolerant, so daß einzelne falsche Informationen überdeckt werden, jedoch kann auch hier bei Werten zwischen "1/2" und "1" bzw. "0" und "1/2" auf die Signalqualität rückgeschlossen werden, wobei "1/2" gerade die Mitte zwischen den den beiden logischen Zuständen zugeordneten Amplitudenwerten symbolisieren soll.

Nach dem gleichen Prinzip wie oben kann die Mittelwertbildung durch einen Speicher übernommen werden. Der Adreßraum ist die zahl der verknüpften Symbole multipliziert mit der Zahl der Quantisierungsbits.je Symbol. Im obigen Beispiel folgt 3 x 4 bit, also ein Adreßraum von $2^{12}$. Die Symbolmitte wird dabei stärker bewertet. Man kann aber auch nur das Symbol und die benachbarten Flanken betrachten und erhält beispielsweise aus der Flanke 01 das Symbol "1" und den benachbarten Flanken 0-1 und 1-0 das Wort "01110", weshalb dem betrachteten Symbol die Bedeutung "1" zugeordnet werden kann. Auch hier kann statt der logischen Bedeutung besser mit der quantisierten Amplitude gearbeitet werden.

Synchronisation und Demodulation werden auf der Basis einer einfachen Mustererkennung durch zwei hintereinander geschaltete Speicher realisiert und in integrierter Form hergestellt.

Bei einer Erweiterung auf mehrstufige Modulationsarten, wie z.B. CP-4FSK(2RC) ist eine höherstufige Quantisierung vorgesehen, wobei der Adreßraum des Musterspeichers entsprechend größer ausgelegt ist. Beim Partial-Response-Verfahren erfolgt eine Auswertung über mehrere Symbole ganz analog zu dem bisher dargestellten Prinzip.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

**Patentansprüche**

1. Verfahren zur Demodulation und Synchronisation für digital modulierte Signale, insbesondere CPM-Signale, bei einem digitalen Mobilfunkübertragungsverfahren, dadurch gekennzeichnet, daß aus dem zu demodulierenden Signal nach Begrenzung und vorzugsweise linearer FM-Demodulation ein Basisbandsignal gewonnen wird, das in seiner Amplitude in einem Zeitraster quantisiert ist, welches in einem ganzzahligen Verhältnis zum Symboltakt steht, wobei

   ein Symbol gebildet wird durch jeweils eine Anzahl von zeitlich nacheinander in einem festen zeitlichen Raster in dem empfangenen Signal ausgewählter und zwischengespeicherter digitalisierter Signalamplituden in Form eines Musters,

   dieses Symbol mindestens mittelbar mit einer Anzahl von in einem Speicher festgehaltenen Signalmustern verglichen wird und

   bei Übereinstimmung innerhalb einer vorgegebenen Genauigkeit mit einem der gespeicherten Signalmuster dieses oder eine diesem zugeordnete Information und ein Synchronisationsimpuls zur Erzeugung des Zeitrasters ausgegeben wird.

2. Verfahren nach Anspruch 1, **dadurch gekennzeichnet**, daß die Amplituden mit $2^n$-fachem Symboltakt abgetastet werden, wobei n insbesondere 3 oder 4 ist.

3. Verfahren nach einem der vorangehenden Ansprüche, **gekennzeichnet durch** die Anwendung bei zwei- oder mehrstufigen Winkelmodulationsverfahren, insbesondere mit konstanter Amplitude bzw. Hüllkurvenverfahren.

4. Verfahren nach einem der vorangehenden Ansprüche, **gekennzeichnet durch** das Vorsehen einer relativ harten Begrenzung.

5. Verfahren nach einem der Ansprüche 3 oder 4, **gekennzeichnet** insbesondere **durch** die Anwendung auf die CPM-Verfahren CP-BFSK(2RC) oder CP-4FSK(2RC).

6. Verfahren nach einem der vorangehenden Ansprüche, **dadurch gekennzeichnet**, daß die Synchronisation des Symboltaktes aus der Symbolflanke abgeleitet wird.

7. Verfahren nach einem der vorangehenden Ansprüche, **dadurch gekennzeichnet**, daß das empfangene und symboltaktrichtig abgetastete Muster zwecks zentrierung zur Symbolmitte über die Symbollänge aufgezeichnet und mit den gespeicherten Musterkurven verglichen wird, wobei die Symbolmitte derjenigen Musterkurve zur zentrierung herangezogen wird, bei dem im Mittel die Übereinstimmung am größten ist.

8. Verfahren nach Anspruch 7, **dadurch gekennzeichnet,** daß als Maß für die Übereinstimmung die geringste Summe der quadratischen Differenzen dient.

9. Verfahren nach Anspruch 7, **dadurch gekennzeichnet**, daß das System diesen Zusammenhang durch Lernen selbst ermittelt.

10. Verfahren nach einem der vorangehenden Ansprüche, **dadurch gekennzeichnet**, daß die Demodulation mittels eines Speichers erfolgt, wobei einige digitalisierte Amplitudenwerte des empfangenen Signals als Adressen für den Speicher dienen, aus dessen Speicherplätzen das zugeordnete Ergebnis auslesbar ist.

11. Verfahren nach einem der vorangehenden Ansprüche, **dadurch gekennzeichnet**, daß zur Herabsetzung von Störungen eine Abtastung über mehrere Symbolzeiträume, insbesondere drei oder fünf, erfolgt.

12. Verfahren nach einem der vorangehenden Ansprüche, **dadurch gekennzeichnet**, daß aus Amplitudenfehlern, Offsetfehlern oder Signalverformungen ein Meßwert für die mittlere Empfangsqualität abgeleitet wird.

13. Verfahren nach einem der vorangehenden Ansprüche, **dadurch gekennzeichnet**, daß die Demodulation, insbesondere unter Benutzung fehlerkorrigierender Codes, mehrstufig erfolgt.

14. Verfahren nach einem der vorangehenden Ansprüche, **gekennzeichnet durch** eine Mittelwertbildung über jeweils mehrere aufeinanderfolgende Symbole.

15. Verfahren nach Anspruch 13, **dadurch gekennzeichnet**, daß anstelle der demodulierten logischen Werte direkt die quantisierten Signalwerte für diese Mittelwertbildung herangezogen werden.

**16.** Verfahren nach einem der Ansprüche 13 oder 14, **dadurch gekennzeichnet**, daß die Mittelwertbildung mittels eines adressierbaren Speichers erfolgt, wobei das Adressensignal aus den zu mittelnden Symbolen gebildet wird.

**17.** Verfahren nach einem der vorangehenden Ansprüche, **dadurch gekennzeichnet**, daß Synchronisation und Demodulation zweistufig mittels zweier aufeinanderfolgender Speicher erfolgen.

**18.** Verfahren nach einem der vorangehenden Ansprüche, **dadurch gekennzeichnet**, daß bei geringfügiger Abweichung zwischen Symbol und Vergleichsmuster zusätzlich oder anstelle der darin enthaltenden Information bzw. des Synchronisationssignals ein einen Fehler kennzeichnendes Signal abgegeben wird.

**Claims**

**1.** Method for demodulating and synchronizing digitally modulated signals, in particular CPM signals, in a digital mobile radio transmission process, characterized in that from the signal to be demodulated, after limiting and preferably linear FM demodulation a baseband signal is recovered, the amplitude of which is quantized in a timing pattern which has an integral relationship to the symbol clock, a symbol being formed by in each case a number of digitized signal amplitudes selected successively in time in a fixed timing pattern in the received signal and temporarily stored in the form of a pattern, this symbol being compared at least indirectly with a number of signal patterns stored in a memory and, in the case of correspondence with one of the stored signal patterns within a predetermined degree of accuracy, this signal pattern or an information item associated with this signal pattern and a synchronization pulse being output for generating the timing pattern.

**2.** Method according to Claim 1, characterized in that the amplitudes are sampled at $2^n$ times the symbol clock, n being 3 or 4, in particular.

**3.** Method according to one of the preceding claims, characterized by its application in two- or multistage angle modulation methods, particularly with constant amplitude or, respectively, envelope curve methods.

**4.** Method according to one of the preceding claims, characterized by providing relatively hard limiting.

**5.** Method according to one of Claims 3 or 4, characterized, in particular, by its application to the CPM methods CP-BFSK(2RC) or CP-4FSK(2RC).

**6.** Method according to one of the preceding claims, characterized in that the synchronization of the symbol clock is derived from the symbol edge.

**7.** Method according to one of the preceding claims, characterized in that the received pattern sampled at the correct symbol clock rate is recorded over the symbol length for the purpose of centring to the symbol centre and is compared with the stored curve patterns, the symbol centre of the curve pattern, in the case of which correspondence is greatest in the mean, being used for centring.

**8.** Method according to Claim 7, characterized in that the least sum of differences squared is used as a measure of the correspondence.

**9.** Method according to Claim 7, characterized in that the system itself determines this relationship by learning.

**10.** Method according to one of the preceding claims, characterized in that the demodulation is effected by means of a memory, some digitized amplitude values of the received signal being used as addresses for the memory, from the storage locations of which the associated result can be read out.

**11.** Method according to one of the preceding claims, characterized in that sampling is effected over a number of symbol periods, particularly three or five, in order to reduce disturbances.

**12.** Method according to one of the preceding claims, characterized in that a measurement value for the mean quality of reception is derived from amplitude errors, offset errors or signal distortions.

**13.** Method according to one of the preceding claims, characterized in that the demodulation takes place in several stages, particularly by using error-correcting codes.

**14.** Method according to one of the preceding claims, characterized by forming a mean value over in each case a number of successive symbols.

**15.** Method according to Claim 13, characterized in that, instead of the demodulated logic values, the quantized signal values are directly used for forming this mean value.

**16.** Method according to one of Claims 13 or 14, characterized in that the mean value is formed by means of an addressable memory, the address signal being formed from the symbols to be averaged.

**17.** Method according to one of the preceding claims, characterized in that synchronization and demodulation occur in two stages by means of two successive memories.

18. Method according to one of the preceding claims, characterized in that in the case of a slight deviation between symbol and reference pattern, a signal identifying an error is output in addition to or instead of the information contained therein or, respectively, of the synchronization signal.

**Revendications**

1. Procédé de démodulation et de synchronisation de signaux numériques modulés, notamment de signaux CPM, dans un procédé de transmission radio mobile, numérique,
caractérisé en ce qu'
à partir du signal à démoduler, après délimitation et de préférence démodulation MF, linéaire, on forme un signal de bande de base dont on quantifie l'amplitude suivant une trame de temps, selon un rapport, avec la cadence de symbole, qui correspond à un nombre entier,

- on forme un symbole chaque fois par un certain nombre de signaux successifs dans le temps, reçus dans une trame de temps fixe, et d'amplitudes de signal, numérisées, mises en mémoire intermédiaire sous la forme d'un modèle,
- on compare ce symbole au moins indirectement à un certain nombre de modèles de signal enregistrés dans la mémoire et,
- en cas de concordance, à l'intérieur d'une précision donnée, avec le modèle de signal mis en mémoire, on émet celui-ci ou une information correspondante, et une impulsion de synchronisation, pour générer la trame de temps.

2. Procédé selon la revendication 1,
caractérisé en ce qu'
on détecte les amplitudes à une cadence égale à $2^n$ fois la cadence de symbole, n étant notamment égal à 3 ou 4.

3. Procédé selon l'une quelconque des revendications précédentes,
caractérisé par
l'application à des procédés de modulation angulaire à deux ou plusieurs niveaux, notamment selon le procédé d'amplitude constante ou de courbe enveloppe.

4. Procédé selon l'une quelconque des revendications précédentes,
caractérisé par
une limitation relativement sévère.

5. Procédé selon l'une quelconque des revendications 3 ou 4,
caractérisé notamment par
l'application des procédés CPM, CP-BFSK(2RC) ou CP-4FSK(2RC).

6. Procédé selon l'une quelconque des revendications précédentes,
caractérisé en ce que
la synchronisation de la cadence du symbole est déduite du flanc du symbole.

7. Procédé selon l'une quelconque des revendications précédentes,
caractérisé en ce que
le modèle reçu et détecté, correctement à la cadence de symbole, est inscrit pour son centrage par rapport au milieu du symbole, suivant la longueur du symbole, et est comparé à des courbes modèles mises en mémoire, le milieu du symbole de la courbe modèle utilisé pour le centrage étant celui pour lequel, en moyenne, la coïncidence est la plus grande.

8. Procédé selon la revendication 7,
caractérisé en ce que
la mesure de la coïncidence utilise la somme des moindres différences quadratiques.

9. Procédé selon la revendication 7,
caractérisé en ce que
le système détermine lui-même cette relation par apprentissage.

10. Procédé selon l'une quelconque des revendications précédentes,
caractérisé en ce que
la démodulation se fait à l'aide d'une mémoire, quelques valeurs d'amplitude numérisées du signal reçu servant d'adresses pour la mémoire adresses à partir desquelles on peut extraire le résultat correspondant des emplacements de la mémoire.

11. Procédé selon l'une quelconque des revendications précédentes,
caractérisé en ce que
pour réduire les dérangements, on détecte sur plusieurs espaces de temps de symbole, notamment trois ou cinq.

12. Procédé selon l'une quelconque des revendications précédentes,
caractérisé en ce qu'
à partir d'erreurs d'amplitude, d'erreurs de décalage ou de déformations du signal, on déduit une valeur de mesure pour la qualité moyenne de réception.

13. Procédé selon l'une quelconque des revendications précédentes,
caractérisé en ce que
la démodulation se fait en plusieurs étapes, notamment en utilisant un code de correction de défaut.

14. Procédé selon l'une quelconque des revendications précédentes,
caractérisé par
la formation d'une moyenne sur plusieurs symboles successifs.

15. Procédé selon la revendication 13,
caractérisé en ce qu'
à la place de valeurs logiques démodulées, on utilise directement une valeur de signal quantifiée pour former la moyenne.

16. Procédé selon l'une quelconque des revendications 13 ou 14
caractérisé en ce qu'
on forme la valeur moyenne à l'aide d'une mémoire adressable, le signal d'adresse étant formé à partir des symboles dont on forme la moyenne.

17. Procédé selon l'une quelconque des revendications précédentes,
caractérisé en ce que
la synchronisation et la démodulation se font en deux étapes à l'aide de deux mémoires successives.

18. Procédé selon l'une quelconque des revendications précédentes,
caractérisé en ce que
pour une faible déviation entre le symbole et le modèle de comparaison, on fournit en outre ou à la place de l'information contenue ou du signal de synchronisation, un signal caractérisant un défaut.

Fig. 1

Basisband-signal

z.B.
$f_A = 8 \cdot f_{symb.}$
oder
$f_A = 16 \cdot f_{symb.}$

Synchronimpulse (Mitte und Flanken)

Symboltakt

$f_{symb.}$

Abtasttakt $f_A$

Schreib-/Lesetakt

z.B. $2 \cdot f_{symb.}$

4 bit

$W1_0$

4 bit

Muster-ROM I

3 bit

$W2_0$

$W1_5$

4 bit

$W2_1$

4bit

$W2_2$

3 bit

Muster-ROM II

$W1_9$

$W2_3$

je 3 bit

Daten

3bit

schnelles Qualitätskriterium

schnelle Stör-meldung

gemitteltes Qualitätskriterium

Wortschieberegister 1

Wortschieberegister 2

EP 0 514 629 B1

Fig. 2a

s(t)

Flankenmitte

Symbolmitte

Synchronisationsschrittweite

Abtastzeitpunkte (bei Synchronisation)

Fig. 2c

s(t)

Auswertefelder

Rauschen und Störungen

Nutzsignalbereich

Rauschen und Störungen

$T_{symbol}$

Fig. 2b

Fig. 3

Fig. 4

SYMBOL — "1" — "0" — "0" mit Offset — "1" gestört — "1" mit zu hoher Amplitude

Fig. 5

SIGNAL-QUALITÄT — sehr gut — gut — mäßig — schlecht — unbrauchbar

16

| ... | $T_{i-2}$ | $T_{i-1}$ | $T_i$ | $T_{i+1}$ | $T_{i+2}$ | ... | |
|-----|-----|-----|-----|-----|-----|-----|-----|
| | | - | 0 | - | | | i-1 |
| | 0 | 0 | 1 | | | | i-1 |
| | | - | 1 | - | | | i |
| | 0 | 1 | 0 | | | | i |
| | | - | 0 | - | | | i+1 |
| | | 1 | 0 | 0 | | | i+1 |
| | | | 1 | | | | i |

Fig. 6

| ... | $T_{i-2}$ | $T_{i-1}$ | $T_i$ | $T_{i+1}$ | $T_{i+2}$ | ... | |
|-----|-----|-----|-----|-----|-----|-----|-----|
| | | - | 0,2 | - | | | i-1 |
| | 0,1 | 0,2 | 0,8 | | | | i-1 |
| | | - | 0,8 | - | | | i |
| | 0,2 | 0,8 | 0,3 | | | | i |
| | | - | 0,3 | - | | | i+1 |
| | | 0,8 | 0,3 | 0,1 | | | i+1 |
| | | | 0,8 | | | | i |

Fig. 7